# Europäisches Patentamt
## European Patent Office
## Office européen des brevets

(11) Publication number: **0 182 806**
**B1**

(12) **EUROPEAN PATENT SPECIFICATION**

(45) Date of publication of patent specification: **15.06.88**

(51) Int. Cl.⁴: **B 23 K 20/08**, F 16 L 13/14

(21) Application number: **85902199.0**

(22) Date of filing: **17.04.85**

(86) International application number:
**PCT/SE85/00176**

(87) International publication number:
**WO 85/05306 05.12.85 Gazette 85/26**

(54) **A MEANS FOR JOINING TWO PIPE SECTIONS TOGETHER.**

(30) Priority: **14.05.84 SE 8402585**

(43) Date of publication of application:
**04.06.86 Bulletin 86/23**

(45) Publication of the grant of the patent:
**15.06.88 Bulletin 88/24**

(84) Designated Contracting States:
**DE FR GB IT NL**

(56) References cited:
**EP-A-0 031 277**
**DE-A-1 909 864**
**SE-B-81 059 222**

(73) Proprietor: **NITRO NOBEL AKTIEBOLAG**
**S-710 30 Gyttorp (SE)**
(73) Proprietor: **AB VOLVO**
**Torslanda**
**S-405 08 Göteborg (SE)**

(72) Inventor: **LANDE, Göran**
**Lammholmsbacken 85**
**S-127 49 Skärholmen (SE)**
Inventor: **PERSSON, Bengt**
**Hjälmvägen 4**
**S-293 00 Olofström (SE)**

(74) Representative: **Lautmann, Kurt O.**
**KURT LAUTMANNS PATENTBYRA AB Box 245**
**S-691 25 Karlskoga (SE)**

Courier Press, Leamington Spa, England.

## Description

The present invention relates to a means for joining two pipe sections together. More specifically the invention relates to a joint in which one pipe section is inserted into the second pipe section. According to known technique, such a joint can be effected by means of welding or explosive welding. Conventional welding generally takes too long and in certain cases explosive welding is too expensive in view of the aids required. Furthermore, both these known joining methods are unsuitable when joining is to be effected in waterways at depths of 3—400 metres.

From GB—A—2106817 is known a method and device for explosive joining of pipes. An outer ring is placed over the pipe joint and an inner ring is placed inside the pipes directly opposite the outer ring. The detonation of an explosive charge inside the inner ring expands the same, deforming the pipe ends at the same time as the inner ring is welded to the pipe ends.

The present invention relates to a means for joining two pipe sections together, in which one pipe section is inserted into the other pipe section and joining is effected by the two pipe sections being clamped together. In practice this is effected by using explosive placed inside the inner pipe, the nature of the explosive being such that upon detonation it effects a clamping action between the two pipe sections, and by providing the outer pipe section with one or more peripheral internal grooves.

An explosive is suitably chosen which results in both the pipe sections outside the explosive being plastically deformed.

An explosive is suitably chosen which when detonated results in a plastic deformation of 1% in the outer pipe section.

The explosive selected should affect the two pipe sections so that the plastic deformation does not exceed the yield point of the material in the two pipe sections.

Said peripheral grooves may have a depth of 60% of the thickness of the pipe and a width of five times the thickness of the pipe section.

According to an advantageous embodiment of the invention, said grooves may be partially or entirely filled with elastomeric material such as rubber or plastic.

The explosive used may be in tubular form and may be in direct or indirect contact with the inner pipe section. If it is in direct contact, a layer of elastomeric material is generally arranged between the explosive and the inner pipe section.

A layer of elastomeric material may also be arranged between the inner and the outer pipe sections, in which case it may consist of rubber or plastic. The material should be tubular.

The means for joining an inner pipe section and an outer pipe section may also be used for splicing two pipes. In this case two inner pipes are brought into contact with each other, each pipe being provided individually with an explosive charge, or both being provided with a common explosive charge. The outer pipe section is then pushed over the two inner pipe sections. When the explosive is detonated a joint is obtained between the two inner pipe sections. The same means used to join two similar pipe sections with the aid of explosive and an outer, surrounding pipe section, can also be used to repair a pipe. The defective part is removed and a new, whole pipe section is inserted instead between the two ends after removal of the defective piece. The replacement section is joined at both ends in exactly the same way as described above for joining two inner pipe sections covered by an outer pipe section. This means is used at both ends of the replacement piece. This application of the invention is particularly suitable for repair work on pipes located at the bottom of a waterway.

Another application of the invention is in connection with distributer units consisting of a number of branch conduits. Here, each branch conduit constitutes the outer pipe when joining a pipe line which constitutes the inner pipe.

Further characteristics of the present invention are revealed in the following claims.

The present invention will be more fully described with reference to the accompanying four sheets of drawings, in which:

Figures 1—4 show two different embodiments of an outer pipe section and an inner pipe section, before joining and after joining,

Figures 5—6 show an inner pipe section with two different embodiments for the explosive,

Figures 7—8 show two inner pipe sections in two different positions before joining,

Figures 9—10 shows two different branch conduits designed for joining a number of pipes, the ends of the branch conduit constituting the outer pipe section in relation to the pipeline to be joined, which constitutes the inner pipe section, and

Figure 11 shows six different consecutive stages in the repair of a defective section of pipeline.

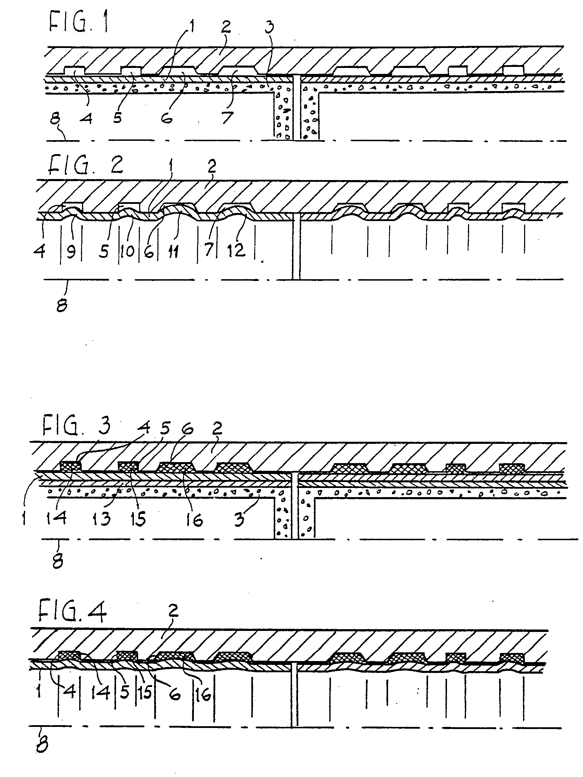

Figure 1 shows the righthand end of a first pipe 1. The pipe is inserted in a second pipe 2 which may be called the outer pipe, splice pipe or sleeve. The outer pipe 2 is provided with a number of peripheral grooves 4—7, where the depth of the grooves may be 60% of the thickness of the outer pipe 2, and there grooves may have a width corresponding to five times the thickness of the outer pipe 2. Inside the first or inner pipe is an explosive 3 in the form of a tube, with its right end closed and a detonator placed centrally at its end. The designation 8 indicates the centre line of the two pipes 1 and 2. When the explosive 3 is detonated the two pipes 1 and 2 are subjected to a force directed radially outwards. This force shall be of such a magnitude that when it has spent itself the two pipes 1 and 2 shall be clamped together. The force of the explosive shall be selected so that the yield point for the material in the two pipes 1 and 2 is not exceeded. The radial forces affect the inner pipe 1 in a manner causing a number of peripheral ridges or elevations 9—12 which penetrate into the peripheral grooves 4—7.

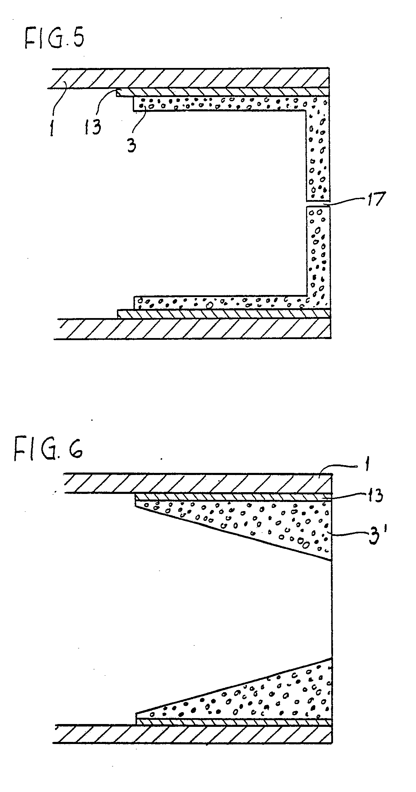

Figures 3—4 show the pipes 1 and 2 before and after detonation of the explosive 3. The difference in relation to the means according to Figures 1—2 is that the grooves 4—6 have been filled with elastomeric material which may consist of rubber or plastic. Another difference is that a tubular, elastomeric layer 13 has been arranged between the inner pipe section 1 and the explosive 3.

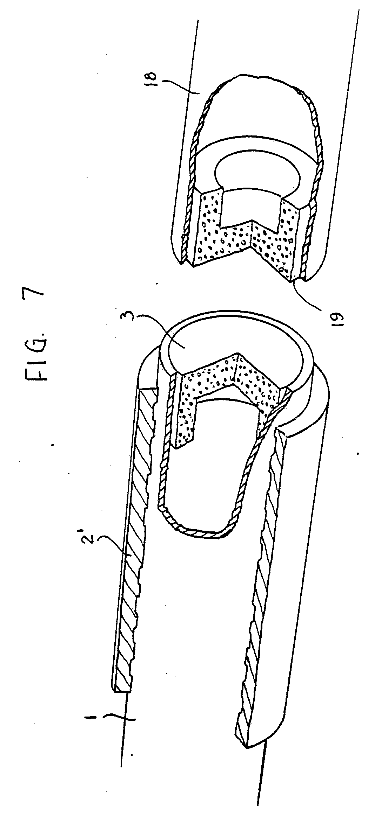

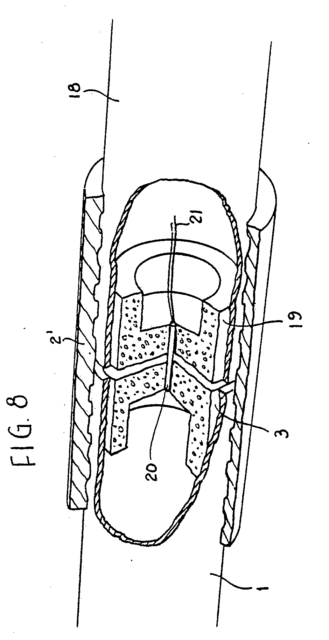

Figures 5 and 6 show two different embodiments of explosive. In Figure 5 the longitudinal cross-section of the explosive is U-shaped, the yoke being provided with a recess 17 for a detonator, not shown. In Figure 6, however, the explosive 3' is tubular or annular.

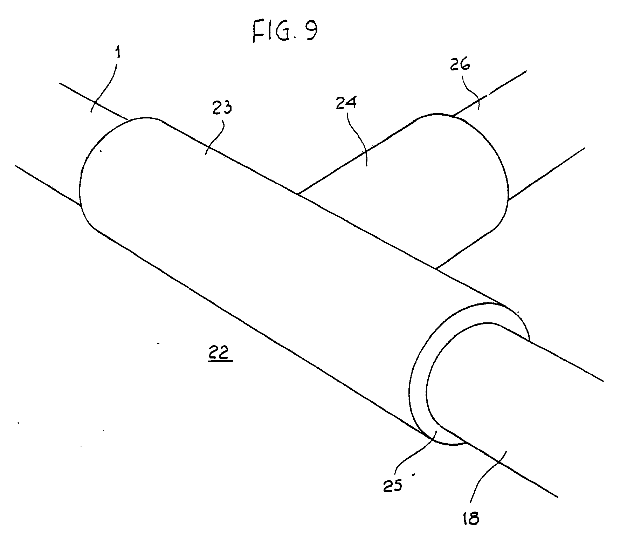

Figures 7 and 8 show two different stages when using a means according to Figure 1 to splice two pipe sections arranged end to end. Considering Figure 7, a first pipe section or inner pipe 1 can be seen on the left and a second pipe section or sleeve 2'. The pipe section 1 is provided with explosive 3 at its righthand end. The inner pipe section 1 is to be spliced to a second pipe section 18 of the same size as the pipe section 1. In relation to the outer pipe section 2', the pipe section 18 becomes an inner pipe. The pipe section 18 is provided at its lefthand end with explosive 19. The two pipe sections 1 and 18 can be moved towards each other into contact or near contact with each other, as shown in Figure 8. At this stage the outer pipe section 2' is moved to the right to cover the two inner pipe sections 1 and 18, as can be seen in Figure 8. The outer pipe section 2' may be provided with a number of peripheral grooves in the same way as the corresponding pipe sections in Figures 1—4. At the centre of the two explosives 3 and 19 are detonators 20 and fuses 21. The outer pipe section 2' and inner pipe sections 1 and 18 are joined together upon initiation of the detonator 20 in the same way as in Figures 1—4.

Figure 9 shows a branch pipe 22 with three pipe ends 23—25 for the receipt of three pipes 1, 18 and 26. The pipes inserted into the ends of the branch pipe 22 are joined in the same way as in Figures 1—4.

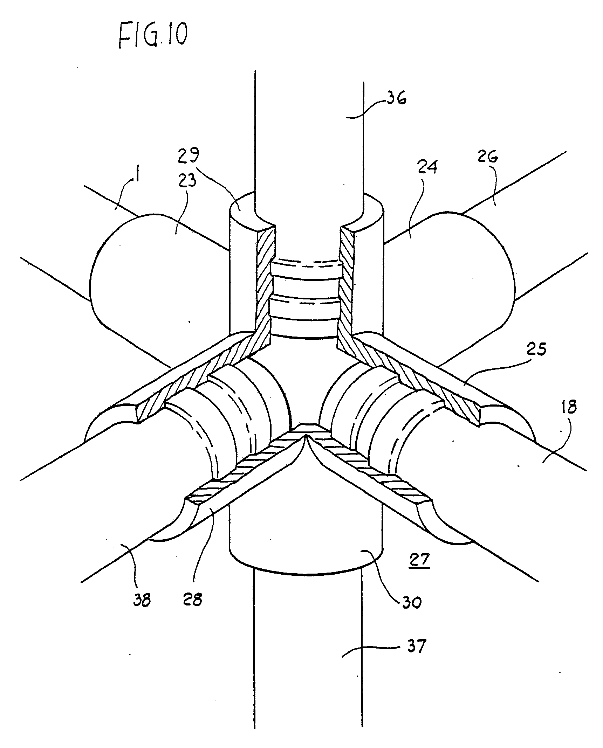

Figure 10 shows another example of a branch pipe 27 with no less than six pipe ends 23, 24, 25, 28, 29 and 30, these pipe ends being joined to the pipe sections 1, 18, 26, 36, 37 and 38.

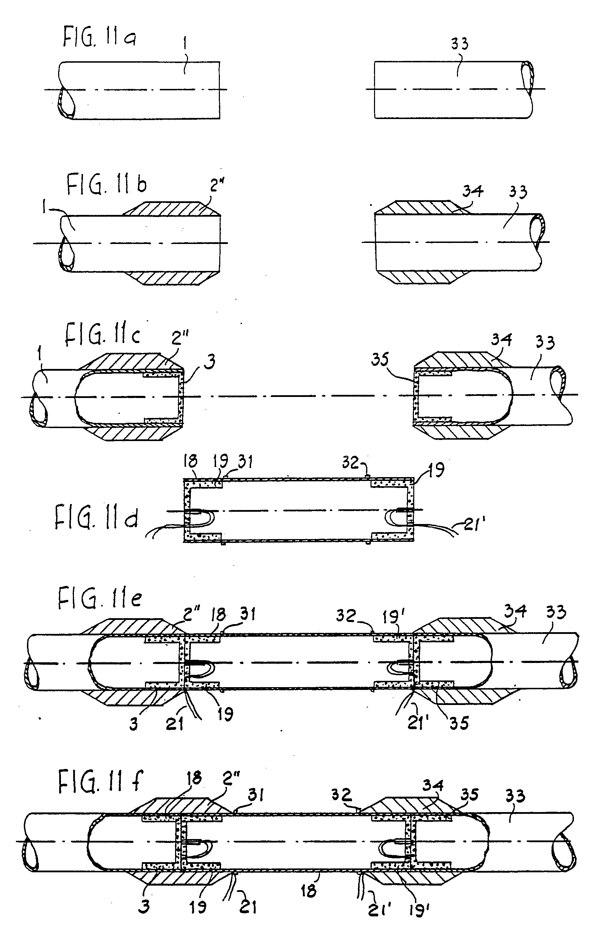

Figures 11a, 11b, 11c, 11d, 11e and 11f show how the means according to Figures 7 and 8 can be used to repair a pipeline. Figure 11a shows two pipe ends 11 and 33, the damaged intermediate part having been cut away. The two pipe ends 1 and 2 are each provided with an outer pipe section of sleeve 2'' and 34, as shown in Figure 11b. Figure 11c shows how the requisite explosive charges 3 and 35 are applied in the pipe ends 1 and 33. A pipe section to replace the damaged section is to be placed between pipe ends 1 and 33. Such a replacement section is shown in Figure 11d. Here it is designated 18 and is provided at both ends with an explosive 19, 19', respectively and may be the same shape as is shown in Figure 7. Each explosive contains a detonator, the fuses being designated 21 and 21'. A short distance from each end, the pipe section 18 is provided with two stops 31 and 32, which may either be annular or consist of an outwardly directed unit. The pipe section 18 in Figure 11d is placed between the two pipe sections 1 and 33, as can be seen in Figure 11e. The righthand outer pipe section 34 is then pushed to the left until it encounters the stop 32. The outer pipe section 2'' is pushed to the right until it encounters the stop 31. In Figure 11f the inner pipe sections 1, 18 and 33 and the outer pipe sections 2'' and 34 assume the positions necessary for detonation of explosives 3, 19, 19' and 35. Upon detonation, the pipe sections 1 and 18 will be joined together by a clamping action and the inner pipe sections 18 and 33 will be joined to the outer pipe section 34 by a clamping action. The two pipe sections 1 and 33 have now been joined in an extremely simple and elegant manner.

The procedure described in Figures 11a, b, c and d, e and f is particularly suitable for use in repairing defective pipelines in waterways, at the bottom of the waterway, for instance. No complicated tools are required. All that is necessary is to fit the pipe section 18 and then push over the outer pipe sections 2'' and 34 and then select an explosive which will elastically deform both outer and inner pipe sections in such a way that when the pressure has ceased, the outer, cylindrical parts 2'' and 34 will have decreased diameter. This decrease in diameter gives rise to a clamping action around the inner cylindrical sections.

**Claims**

1. Means for clamping a first pipe section (1) in a second pipe section (2) into which the first pipe section is inserted, the outer surface of the first pipe section being in close proximity to the surface of the second pipe section so that the first pipe section can be inserted without force into the second pipe section, the second pipe section (2) constituting a support against radial forces from the inside and the first pipe section (1) containing explosive (3) so dimensioned that when the explosive is detonated the first pipe section will be clamped securely in the second pipe section (2) by plastic deformation of the first pipe section (1), characterised in that said second pipe section (2) is provided with one or more peripheral internal grooves (4—7).

2. Means according to claim 1, characterised in that the peripheral grooves (4—7) contain elastomeric material such as rubber.

3. Means according to any of the preceding claims, characterised in that the explosive (3) is in tubular or annular in form and is in direct or indirect contact with the inner surface of the first pipe section (1).

4. Means according to claim 3, characterised in that a layer (13) of elastomeric material is arranged between the explosive (3) and the first pipe section (1).

5. Means according to claim 3, characterised in that at the part facing the opening of the first pipe section (1) the explosive (3) is provided with a discshaped piece of explosive partially or entirely closing said part to the explosive (3).

6. Means according to one or more of the preceding claims, characterised in that an elastic layer is arranged between the first (1) and the second (2) pipe sections.

7. Means according to one or more of the preceding claims, characterised in that the explosive (3) is arranged at or close to the end of the first pipe section (1) to be inserted into the second pipe section (2).

8. Means according to one or more of the preceding claims, characterised in that the second pipe section (2') constitutes a support for the first pipe section (1), and also for a third pipe section (18) of the same type as the first pipe section (1), the ends of said latter pipe sections (1 and 18) being in contact or almost in contact with each other.

9. Means according to one or more of the preceding claims, characterised in that said second pipe section consists of the pipe-connection (23) of a distributer unit (27) having a number of branch conduits (23—25, 27—30).

10. Means according to claim 1, characterised in that said explosive is so dimensioned that both the first pipe section (1) and the second pipe section (2) are subjected to plastic deformation.

11. Means according to claim 1 or 2, characterised in that said peripheral grooves (4—6) have a depth of 60% of the thickness of the pipe section (2).

12. Means according to claim 11, characterised in that said peripheral grooves (4—6) have a width of five times the thickness of the pipe section (2).

13. Means according to claim 10, characterised in that the explosive (3) is so dimensioned that the plastic deformation is greater for the second pipe section (2) than for the first pipe section (1).

14. Means according to claim 13, characterised in that the plastic deformation of the second pipe section (2) is approximately 1%.

15. Means according to claim 8, characterised in that the other end of the third pipe section (18) is provided with explosive (19') in the same way as its first end, that the other end is opposite the end of a fourth pipe section (33) which is provided with explosive (35) and a fifth pipe section (34) is provided to act as support for the other end of the third pipe section (18) and said end of the fourth pipe section (33).

## Patentansprüche

1. Einrichtung zum Befestigen eines ersten Rohrabschnitts (1) in einem zweiten Rohrabschnitt (2), wobei der erste Rohrabschnitt (1) in den zweiten Rohrabschnitt (2) eingesetzt ist, der erste Rohrabschnitt mit seiner Außenfläche nahe an der Oberfläche des zweiten Rohrabschnitts liegt, so daß der erste Rohrabschnitt ohne Kraft in den zweiten Rohrabschnitt eingesetzt werden kann, der zweite Rohrabschnitt (2) eine Halterung zur Aufnahme von radial von innen nach außen wirkenden Kräften bildet und der erste Rohrabschnitt (1) Sprengstoff (3) enthält und so dimensioniert ist, daß infolge der Detonation des Sprengstoffes der erste Rohrabschnitt (1) durch plastiche Verformung fest im zweiten Rohrabschnitt (2) befestigt wird, dadurch gekennzeichnet, daß der zweite Rohrabschnitt (2) mit einer oder mehreren, innenliegenden Umfangsnuten (4 bis 7) versehen ist.

2. Einrichtung nach Anspruch 1, dadurch gekennzeichnet, daß in den Umfangsnuten (4 bis 7) elastomeres Material, wie beispielsweise Gummi, aufgenommen ist.

3. Einrichtung nach jedem der vorstehenden Ansprüche, dadurch gekennzeichnet, daß der Sprengstoff (3) rohrförming oder ringförmig ausgebildet ist, und mit der Innenfläche des ersten Rohrabschnitts (1) direkt oder indirekt in Berührung steht.

4. Einrichtung nach Anspruch 3, dadurch gekennzeichnet, daß zwischen dem Sprengstoff (3) und dem ersten Rohrabschnitt (1) eine elastomere Materialschicht (13) angeordnet ist.

5. Einrichtung nach Anspruch 3, dadurch gekennzeichnet, daß an dem der Öffnung des ersten Rohrabschnittes (1) zugewandten Teil der Sprengstoff (3) mit einem scheibenförmigen Stück Sprengstoff versehen ist, das die Teile des Sprengstoffs (3) ganz oder teilsweise verschließt.

6. Einrichtung nach einem oder mehreren der vorstehenden Ansprüche, dadurch gekennzeichnet, daß zwischen dem ersten (1) und dem zweiten Rohrabschnitt (2) eine elastische Schicht angeordnet ist.

7. Einrichtung nach einem oder mehreren der vorstehenden Ansprüche, dadurch gekennzeichnet, daß der Sprengstoff (3) am Ende oder in der Nähe des Endes des ersten Rohrabschnittes (1) angeordnet ist, der in den zweiten Rohrabschnitt (2) eingesetzt ist.

8. Einrichtung nach einem oder mehreren der vorstehenden Ansprüche, dadurch gekennzeichnet, daß der zweite Rohrabschnitt (2') eine Halterung für den ersten Rohrabschnitt (1) und für einen dritten Rohrabschnitt (18) vom gleichen Typ wie der erste Rohrabschnitt, bildet, wobei die Enden der zuletzt genannten Rohrabschnitte (1 und 18) einander berühren oder fast berühren.

9. Einrichtung nach einem oder mehreren der vorstehenden Ansprüche, dadurch gekennzeichnet, daß der genannte zweite Rohrabschnitt aus einer Rohrverbindung (23) einer Verteilereinheit (27) mit einer Anzahl von Zweigleitungen (23 bis 25, 27—30) besteht.

10. Einrichtung nach Anspruch 1, dadurch gekennzeichnet, daß der Sprengstoff so dimensioniert ist, daß sowohl der erste Rohrabschnitt (1) als auch der zweite Rohrabschnitt (2) einer plastischen Verformung unterworfen wird.

11. Einrichtung nach Anspruch 1 oder 2, dadurch gekennzeichnet, daß die Umfangsnuten (4 bis 6) eine Tiefe aufweisen, die 60% der Wandstärke des Rohrabschnitts (2) beträgt.

12. Einrichtung nach Anspruch 11, dadurch gekennzeichnet, daß die Umfangsnuten (4 bis 6) eine Breite aufweisen, die das 5-fache der Wandstärke des Rohrabschnitts (2) beträgt.

13. Einrichtung nach Anspruch 10, dadurch gekennzeichnet, daß der Sprengstoff (3) so dimensioniert ist, daß die plastische Verformung beim zweiten Rohrabschnitt (2) größer als beim ersten Rohrabschnitt (1) ist.

14. Einrichtung nach Anspruch 13, dadurch gekennzeichnet, daß die pastische Verformung des zweiten Rohrabschnitts (2) ungefähr 1% beträgt.

15. Einrichtung nach Anspruch 8, dadurch gekennzeichnet, daß das andere Ende des dritten Rohrabschnitts (18) mit Sprengstoff (19') auf die gleiche Art und Weise wie am ersten Ende, versehen ist, daß das andere Ende gegenüber dem Ende eines vierten Rohrabschnitts (33) liegt, das mit einem Sprengstoff (35) versehen ist, und daß ein fünfter Rohrabschnitt (34) vorgesehen ist, der als Halterung für das andere Ende des dritten Rohrabschnitts (18) und dem Ende des vierten Rohrabschnitts (33) dient.

**Revendications**

1. Dispositif pour le serrage d'un premier tronçon de tube (1) dans un second tronçon de tube (2) dans lequel le premier tronçon de tube est inséré, la surface extérieure du premier tronçon de tube étant étroitement voisine de la surface du second tronçon de tube de façon qu'on puisse insérer sans forcer le premier tronçon de tube dans le second tronçon de tube, le second tronçon de tube (2) faisant office de support à l'encontre de forces radiales en provenance de l'intérieur et le premier tronçon de tube (1) contenant de l'explosif (3) dimensionné en sorte que lorsqu'il détone, le premier tronçon de tube se trouve fermement cramponné dans le second tronçon de tube (2) par déformation plastique de premier tronçon de tube (1), caractérisé en ce que ledit second tronçon de tube (2) présente une ou plusieurs rainures internes périphériques (4—7).

2. Dispositif selon la revendication 1, caractérisé en ce que les rainures périphériques (4—7) contiennent de la matière élastomère telle que caoutchouc.

3. Dispositif selon l'une quelconque des revendications précédentes, caractérisé en ce que l'explosif (3) est sous forme tubulaire ou annulaire et est en contact direct ou indirect avec la surface intérieure du premier tronçon de tube (1).

4. Dispositif selon la revendication 3, caractérisé en ce qu'une couche (13) de matière élastomère est disposée entre l'explosif (3) et le premier tronçon de tube (1).

5. Dispositif selon la revendication 3, caractérisé en ce que l'explosif (3) présente dans sa partie faisant face à l'ouverture du premier tronçon de tube (1) une pièce en explosif en forme de disque fermant partiellement ou entièrement ladite partie à l'explosif (3).

6. Dispositif selon une ou plusieurs des revendications précédentes, caractérisé en ce qu'une couche élastique est disposée entre les premier (1) et second (2) tronçons de tube.

7. Dispositif selon une ou plusieurs des revendications précédentes, caractérisé en ce que l'explosif (3) est disposé au niveau ou auprès de l'extrémité du premier tronçon de tube (1) à insérer dans le second tronçon de tube (2).

8. Dispositif selon une ou plusieurs des revendications précédentes, caractérisé en ce que le second tronçon de tube (2') fait office de support vis-à-vis du premier tronçon de tube (1), et aussi vis-à-vis d'un troisième tronçon de tube (18) du même type que le premier tronçon de tube (1), les extrémités de ces derniers tronçons de tube (1 et 18) étant en contact ou presque en contact l'une avec l'autre.

9. Dispositif selon une ou plusieurs des revendications précédentes, caractérisé en ce que ledit second tronçon de tube est constitué par le raccord de tuyauterie (23) d'un distributeur (27) présentant un certain nombre de ramifications (23—25, 27—30).

10. Dispositif selon la revendication 1, caractérisé en ce que ledit explosif est dimensionné en sorte que tant le premier tronçon de tube (1) que le second tronçon de tube (2) subissent une déformation plastique.

11. Dispositif selon la revendication 1 ou 2, caractérisé en ce que lesdites rainures périphériques (4—6) ont une profondeur égale à 60% de l'épaisseur du tronçon de tube (2).

12. Dispositif selon la revendication 11, caractérisé en ce que lesdites rainures périphériques (4—6) ont une largeur égale au quintuple de l'épaisseur du tronçon de tube (2).

13. Dispositif selon la revendication 10, caractérisé en ce que l'explosif (3) est dimensionné en sorte que la déformation plastique soit plus grande pour le second tronçon de tube (2) que pour le premier tronçon de tube (1).

14. Dispositif selon la revendication 13, caractérisé en ce que la déformation plastique du second tronçon de tube (2) est d'environ 1%.

15. Dispositif selon la revendication 8, caractérisé en ce que l'autre extrémité du troisième tronçon de tube (18) est muni d'explosif (19') de la même manière que la première extrémité de celui-ci, que l'autre extrémité est opposée à l'extrémité d'un quatrième tronçon de tube (33) qui est munie d'explosif (35) et qu'un cinquième tronçon de tube (34) est prévu pour faire office de support vis-à-vis de l'autre extrémité du troisièem tronçon de tube (18) et de ladite extrémité du quatrième tronçon de tube (33).

FIG. 1

FIG. 2

FIG. 3

FIG. 4

FIG.5

1  13  3  17

FIG.6

1  13  3'

FIG. 7

FIG. 8

FIG. 9

FIG.10

FIG. 11a

FIG. 11b

FIG. 11c

FIG. 11d

FIG. 11e

FIG. 11f